# EUROPÄISCHE PATENTANMELDUNG

(11) **EP 4 725 295 A1**
(43) Veröffentlichungstag der Anmeldung: **15.04.2026**
(21) Anmeldenummer: 24206489.7
(22) Anmeldetag: 14.10.2024
(51) Int. Cl.: A01G 9/14, A01G 31/06

(54) **TRANSPORTROBOTER ZUR AUFZUCHT VON PFLANZEN**

(71) Anmelder: Heron Innovations Factory GmbH, 6850 Dornbirn (AT)
(72) Erfinder: Beer, Christian, 6858 Schwarzach (AT)
(74) Vertreter: Riebling, Peter

(57) **Zusammenfassung**

Transportroboter (1) zur Aufzucht von Pflanzen (25) in einem Regallager (17), wobei der Transportroboter (1) als schienengebundener Transportroboter (1) ausgebildet ist und deckenseitig in einer Regalgasse (20) zwischen zwei Regalreihen (19, 19) des Regallagers (17) fahrbar angeordnet ist, wobei der Transportroboter (1) mit einer heb- und senkbar angetriebenen Ladeplattform (10) und mindestens einem darauf angeordneten Längsförderer (15) mindestens einen Pflanzbehälter (6) in Regallagerplätze (12) des Regallagers (17) ein- oder auslagert, wobei der Transportroboter (1) mit mindestens einer Kamera (23) die Pflanzen (25) kontrolliert, wobei der Transportroboter (1) mindestens eine Kamera (23) und mindestens eine Lichtquelle (24) aufweist, welche an der vertikal beweglichen Ladeplattform (10) oder an dem Transportroboter (1) angeordnet sind.

## Beschreibung

Die Erfindung betrifft einen Transportroboter zur Aufzucht von Pflanzen den Oberbegriffen der Ansprüche 1 und 3, eine Vorrichtung zur Aufzucht von Pflanzen nach dem Oberbegriff des Anspruches 5, sowie ein Verfahren zur Aufzucht von Pflanzen 12.

Ein Transportroboter wird zur Kommissionierung von Pflanzbehältern bei der Aufzucht von Pflanzen in einer vertikalen Landwirtschaft eingesetzt. Unter dem Begriff vertikale Landwirtschaft (engl. vertical farming) wird die Kultivierung von Pflanzen in geschlossenen Räumen, auf mehreren übereinanderliegenden Etagen unter natürlichem bzw. künstlichem Licht verstanden. Bei den Pflanzen handelt es sich um Nutzpflanzen, wie beispielsweise Obst und Gemüse, welche ganzjährig angebaut und geerntet werden. Dies wird insbesondere durch eine künstliche Beleuchtung, eine Klimasteuerung und eine gesteuerte Nährstoffversorgung erreicht.

Die vertikale Landwirtschaft benötigt deutlich weniger Grundfläche, da die Pflanzen in mehrstöckigen Gebäuden (sogenannten Farmscrapers) angebaut werden, welche nahe an Ballungsgebieten der Städte sind. Dadurch werden lange Transportwege von den Anbaugebieten zu den Verbrauchern vermieden. Weitere Vorteile sind die Steigerung der Nutzpflanzenproduktion, der Schutz vor Witterungseinflüssen, ein ressourcenschonender Anbau, die Wassereinsparung durch geschlossene Wasserkreisläufe, sowie die Nutzung von erneuerbaren Energien. Auf den Einsatz von Pestiziden und Fungiziden kann aufgrund der fehlenden Umwelteinflüsse ebenfalls verzichtet werden.

Ein weiterer, wichtiger Faktor bei der vertikalen Landwirtschaft spielt die Automatisierung, denn die automatisierten Produktionsstätten können nicht nur den Mangel an Feldarbeitskräften ausgleichen, sondern es kann auch 24 Stunden und 7 Tage kostengünstig und ressourcenschonend auf einer geringen Grundfläche frisches Gemüse angebaut und geerntet werden. Zusätzlich bringen Mitarbeiter Verunreinigungen in das System.

Aus dem Stand der Technik sind bereits Transportroboter bei der Aufzucht von Pflanzen bekannt. Es werden beispielsweise Transportroboter eingesetzt, welche die einzelnen Pflanzbehälter bzw. Pflanzen innerhalb des Regallagers bewegen und die einzelnen Pflanzen inkl. Substrat aus den Pflanzbehältern entnehmen und diese auf mehrere Behälter aufteilen.

Mit der DE 10 2017 121 638 A1 wird ein schienengebundener Transportroboter mit Hubplattform des gleichen Anmelders offenbart, auf welche vollumfänglich Bezug genommen wird. Des Weiteren kann auch ein Transportroboter gemäß der DE 10 2018 109 495 A1 eingesetzt werden, auf welche ebenfalls vollumfänglich Bezug genommen wird.

Der Transportroboter fährt auf einer Schienenbahn, welche aus zwei beabstandeten Schienensträngen besteht, die im deckenseitigen Bereich jeder Regalgasse angeordnet sind. Der schienengebundene Transportroboter ist zweiteilig ausgebildet, wobei der erste Teil des Transportroboters das Fahrwerk für das horizontale Fahren auf Schienen bildet und der zweite Teil eine HubPlattform mit integriertem Lastenaufnahmemittel aufweist. Durch die Anordnung des Transportroboters im deckennahen Bereich kann die darunterliegende Lagerfläche anderweitig genutzt werden. Die Ein- und Auslagerung der Pflanzbehälter erfolgt mit einem Lastaufnahmemittel, welches beispielsweise als zwei ausfahrbaren Teleskop-Schlitten ausgebildet ist, die den Behälter unterfahren und mittels Zahnriemen präzise auf den Transportroboter laden. Vorzugsweise können die Teleskop-Schlitten zu beiden Seiten der Hubplattform ausgefahren kann werden. Dadurch ist es möglich einen Pflanzbehälter aus dem Regallagerplatz einer ersten Regalreihe zu entnehmen und in einen Regallagerplatz der gegenüberliegenden zweiten Regalreihe abzusetzen. Dadurch wird ein schneller Umsatz der Pflanzbehälter erreicht.

Des Weiteren wird auf die EP 4 252 528 A1 hingewiesen, welche einen Transportroboter offenbart, der Pflanzbehälter mit einem Pflanzenträger innerhalb eines Regallagers transportiert. Bei einer Ausführungsform wird ganz allgemein der Einsatz einer Kamera offenbart, mit welcher der Zustand der Pflanzen festgestellt werden kann.

Die allgemeine Verwendung einer Kamera hat gezeigt, dass damit keine zufriedenstellenden Aufnahmen gemacht werden können und die Kamerasysteme teilweise sehr teuer sind. Insbesondere die kombinierten Systeme, welche eine Beleuchtung und eine Kamera aufweisen, benötigen viel Energie und machen nur bedingt gute Aufnahmen.

Aufgabe der vorliegenden Erfindung ist es daher einen Transportroboter mit einer Kamera bereitzustellen, mit welcher unabhängig von den Umgebungsbedingungen (Lichteinflüsse, etc.) Aufnahmen der Pflanzen mit guter und gleichbleibender Qualität gemacht werden können und welche für eine anschließende, automatisierte Bildverarbeitung genutzt werden können.

Zur Lösung der gestellten Aufgabe ist die Erfindung durch die technische Lehre des Anspruches 1, Anspruches 2, Anspruches 5 und Anspruches 12 gekennzeichnet.

Wesentliches Merkmal der Erfindung ist, dass der Transportroboter mindestens eine Kamera und mindestens eine Lichtquelle aufweist, welche entweder im Bereich des Gehäuses des Transportroboters oder im Bereich der Ladeplattform des Transportroboters angeordnet sind.

Bei den erfindungsgemäßen Ausführungsformen fährt die Kamera auf dem Transportroboter mit. Dadurch ist es möglich während der Fahrt mindestens eine Aufnahme von den Pflanzen in dem zu transportierenden Pflanzbehälter zu machen. Das Mitfahren der Kamera auf dem Transportroboter ist mit dem Vorteil verbunden, dass der Pflanzbehälter nicht mehr zu einem bestimmten Ort innerhalb des Regallagers gebracht werden muss, an welchem eine Kamera fest installiert ist. Des Weiteren kann eine optische Aufnahme von den Pflanzen gemacht werden, während sich die Ladeplattform bewegt. Das Mitführen der Kamera spart Fahrtwege und somit Zeit. Darüber hinaus wird Platz innerhalb des Regallagers eingespart.

Unter einer Kamera wird eine fototechnische Apparatur verstanden, mit welcher man statische oder bewegte Bilder auf einem digitalen Speichermedium aufgezeichnet oder über eine Schnittstelle an eine zentrale Datenverarbeitungsanlage (z.B. Computer übermittelt werden. Mit der Kamera werden Aufnahmen von der Pflanze gemacht, wobei sich vorzugsweise mehrere Pflanzen in einem Pflanzbehälter befinden.

Mit der Kamera findet beispielsweise eine optische Qualitätskontrolle statt. Die Aufnahmen werden ausgewertet, wobei eine Auswertung beispielsweise hinsichtlich der Größe der Pflanzen, der Farbe der Pflanzen, einem Schädlingsbefall oder einer Krankheit an der Pflanze erfolgt.

Anhand der Aufnahmen und der gewonnenen Daten kann beispielsweise die Wachstumsrate der Pflanzen festgestellt werden. Mit Hilfe der Wachstumsrate kann eine Aussage hinsichtlich des zu erwartenden Erntezeitpunkts getroffen werden. Des Weiteren kann anhand der Wachstumsrat bestimmt werden, wie hoch der Platzbedarf der Pflanzen innerhalb des Pflanzbehälters sein wird und wann eine Separierung bzw. Vereinzelung der Pflanzen erfolgen muss. Die Aufnahmen der Pflanzen sind somit für die zeitliche Planung und die Wachstumsbedingungen von Bedeutung.

Bei einer ersten bevorzugten Ausführungsform ist mindestens eine Kamera und mindestens eine Lichtquelle auf der Ladeplattform des Transportroboters angeordnet. Die Kamera und die Lichtquelle fährt somit mit der vertikal beweglichen Ladeplattform mit. Die Anordnung der Kamera und der Lichtquelle auf der Ladeplattform hat den Vorteil, dass relativ zeitnah nach dem Aufladen eines Pflanzbehälters auf der Ladeplattform eine erste optische Aufnahme von den Pflanzen in dem Pflanzbehälter mit der Kamera gemacht werden kann. So kann beispielsweise auch nur ein Pflanzbehälter aus einem Regallagerplatz auf die Ladeplattform geholt werden, um eine optische Aufnahme von den Pflanzen zu machen. Hierfür muss die vertikal bewegliche Ladeplattform nicht bewegt werden und kann auf der gleichen Höhe verbleiben.

Bei der Kamera handelt es sich beispielsweise um eine Industriekamera, welche an der beweglichen Ladeplattform angeordnet ist. Die Anordnung erfolgt mit einem Trägergerüst, welches sich über die Ladeplattform erstreckt. Das Trägergerüst weist eine gewisse Höhe auf, wodurch die Kamera mit einem vertikalen Abstand gegenüber den Pflanzen angeordnet ist. Vorzugsweise ist der vertikale Abstand zwischen der Kamera und den Pflanzen stets der gleiche, so dass keine Objektive mit automatischem Fokus notwendig sind. Dadurch können kostengünstige Kameras mit einem Fixfokus-Objektiv eingesetzt werden.

Die Auswahl der Kamera erfolgt nach der Bildverarbeitungsaufgabe, wobei die folgenden Faktoren hierbei eine Rolle spielen:
- Farb- oder Monochromkamera,
- Schnittstellentyp,
- Global Shutter vs. Rolling Shutter Kameratechnologie und
- Auflösung (Anzahl der Pixel des Sensors)
- Spektrumsbereich (z.B. ultraviolettes (UV) und infrarotes (IR) Licht).

Eine Monochrom-Kamera macht Schwarz-Weiß-Fotos. Mit Hilfe einer Monochrom-Kamera können scharfe Bilder erzeugt werden, was zum beispielsweis beim Zählen (Anzahl) der Pflanzen in einem Pflanzbehälter und bei bestimmten Messungen hinsichtlich der Pflanzen von Vorteil ist. Des Weiteren kann mit der Monochrom-Kamera die Blattgröße und Pflanzengröße aufgenommen und daraus das Erntegewicht ermittelt werden.

Mit einer RGB-Kamera (Rot, Grün, Blau) oder auch Farbkamera genannt erhält man Farbinformationen, welche häufig zur Qualitätskontrolle eingesetzt werden. Anhand der Farbinformationen können Farbunterschiede an den Pflanzen, wie beispielsweise braune Flecken oder Fehler festgestellt werden. Zusätzliche können auch Schädlinge festgestellt werden.

Eine Global-Shutter-Kamera wird immer dann eingesetzt, wenn sich die Pflanzen während der Aufnahme bewegen. Eine Rolling-Shutter-Kamera wird eingesetzt, wenn die Pflanzen während der Aufnahme nicht bewegt werden.

Bei einer weiteren bevorzugten Ausführungsform findet eine automatische Bestimmung von Pflanzenkrankheiten oder Schädlingen anhand der Aufnahmen statt. Von Vorteil ist, wenn wie Pflanzen mit einer guten Belichtung aufgenommen werden. Das System greift auf eine Datenbank zu, in welcher bereits zahlreiche bekannte Pflanzenkrankheiten und Schädlinge hinterlegt sind. Die Datenbank wird ständig aktualisiert und kann sich mit anderen, externen Datenbanken austauschen. Das System weist vorzugsweise eine künstliche Intelligenz (KI) auf, die anhand der Aufnahme feststellt, welche Krankheit die Pflanze hat bzw. welcher Schädling die Pflanze schädigt. Wird eine Krankheit und/oder ein Schädling festgestellt, warnt das System und leitet ggf. die notwendigen Gegenmaßnahmen ein, um die Krankheit bzw. den Schädling zu bekämpfen. Als Gegenmaßnahmen sind beispielsweise der Einsatz von Pflanzenschutzmitteln oder die Separierung und Vernichtung der Pflanze vorstellbar.

Als Lichtquelle wird beispielsweise eine Leuchtdiode (kurz: LED) eingesetzt. Vorzugsweise sind zwei LED-Balken (Barlights) beabstandet voneinander an dem Trägergerüst oberhalb der Ladeplattform angeordnet, so dass der darunterliegende Pflanzbehälter gut ausgeleuchtet ist. Des Weiteren können die beiden Lichtbalken mit einem bestimmten Winkel an dem Trägergerüst angeordnet sein, um mögliche Reflexionen und Schattenbildung zu vermeiden.

Die Lichtquelle ist notwendig, da innerhalb des Regallagers unterschiedliche Lichtverhältnisse vorliegen. Einige der Regallagerplätze weisen eine Beleuchtung auf, mit welcher das Tageslicht für die Pflanzen simuliert wird. Einige der Regallagerplätze weisen keine Beleuchtung auf, um die Nacht zu simulieren. Teilweise ist in der Halle, in welcher sich das Regallager befindet, eine Deckenbeleuchtung installiert. Der Transportroboter fährt somit durch Bereiche mit wechselnden Lichtverhältnissen. Durch das Mitfahren der Lichtquelle ist gewährleistet, dass für die Kamera stets optimale Lichtverhältnisse vorliegen. Dadurch kann eher eine kostengünstigere Kamera eingesetzt werden.

Die Aufnahmen der Kamera werden über eine Schnittstelle an einen zentralen Computer geleitet. Als Schnittstellentyp zwischen der Kamera und dem Computer wird beispielsweise USB3, GigE oder 1 0GigE eingesetzt.

Die Auswertung der Aufnahmen erfolgt mit einer intelligenten Software (Artificial Intelligence Software, kurz AI).

Bei einer zweiten bevorzugten Ausführungsform befindet sich die mindestens eine Kamera und die mindestens eine Lichtquelle am Transportroboter. Hierfür weist der Transportroboter im Bereich seines Gehäuses, vorzugsweise im Bereich der Hubantriebskästen ein Trägergerüst auf, welches sich über die Ausnehmung für die Ladeplattform erstreckt. Die vertikal bewegliche Ladeplattform bringt den aufgeladenen Pflanzbehälter mit den Pflanzen zu der Kamera und der Lichtquelle. Durch die fixe Anordnung der Kamera und der Lichtquellen am Transportroboter wird immer dann eine Aufnahme der Pflanzen gemacht, wenn die Ladeplattform ganz nach oben gefahren ist.

Der Transportroboter kann ferner bei einer Vorrichtung zur Aufzucht von Pflanzen in Pflanzbehältern eingesetzt werden. Die Vorrichtung besteht aus einem Regallager und mindestens einem schienengebundenen Transportroboter, wobei das Regallager mindestens eine erste Regalreihe mit Regallagerplätzen für Pflanzbehälter und mindestens eine beabstandete, zweite Regalreihe mit Regallagerplätzen für Pflanzbehälter aufweist, wobei zwischen den beiden Regalreihen eine Regalgasse besteht, in der deckenseitig der schienengebundene Transportroboter fahrbar angeordnet ist, welcher mit einer heb- und senkbar angetriebenen Ladeplattform und mindestens einem darauf angeordneten Längsförderer mindestens einen Pflanzbehälter die Regallagerplätze ein- oder auslagert. Der Transportroboter kontrolliert mit mindestens einer Kamera die Pflanzen, wobei mindestens eine Kamera und mindestens eine Lichtquelle an der vertikal beweglichen Ladeplattform oder an dem Transportroboter angeordnet sind.

Es wird zusätzlich ein Schutz für ein Verfahren zur Aufzucht von Pflanzen mit einem Transportroboter mit mindestens einer Kamera und mindestens einer Lichtquelle beansprucht.

Bei dem Verfahren zur Aufzucht von Pflanzen in Pflanzbehältern wird ein Regallager und mindestens ein schienengebundener Transportroboter eingesetzt. Das Regallager besteht aus mindestens einer ersten Regalreihe mit Regallagerplätzen für Pflanzbehälter und mindestens einer beabstandeten, zweite Regalreihe mit Regallagerplätzen für Pflanzbehälter. Zwischen den beiden Regalreihen besteht eine Regalgasse, in der deckenseitig der schienengebundene Transportroboter fahrbar angeordnet ist. Der Transportroboter weist eine heb- und senkbar angetriebene Ladeplattform mit einer Ladeebene und mindestens einem darauf angeordneten Längsförderer auf, mit welchem mindestens einen Pflanzbehälter in den Regallagerplatz ein- oder auslagert werden kann. Zusätzlich weist der Transportroboter mindestens eine Kamera auf, mit welcher die Pflanzen kontrolliert werden.

Bei dem erfindungsgemäßen Verfahren weist der Transportroboter mindestens eine Kamera und mindestens eine Lichtquelle auf, welche an der vertikal beweglichen Ladeplattform oder an dem Transportroboter angeordnet sind, wobei folgende Verfahrensschritte ausgeführt werden:
- Anfahren und Positionieren der Ladeplattform gegenüber einem ausgewählten Regallagerplatz;
- Auslagerung des Pflanzbehälters mit den Längsförderern auf die Ladeplattform;
- Aufnahme (und Speicherung) mindestens eines Bildes von den Pflanzen mit der Kamera mit aktivierter Lichtquelle.

Durch die aktivierte Lichtquelle, welche sich im Bereich der Kamera befindet, kann ein optimales Bild der Pflanzen aufgenommen werden.

Folgende alternative Verfahrensschritte sind noch möglich:

### Alternative A)

- Aufnahme und Speicherung mindestens eines Bildes von den Pflanzen mit der Kamera und aktivierter Lichtquelle auf der Ladeplattform.

Bei diesem Verfahrensschritt ist die Kamera und die Lichtquelle an der Ladeplattform angeordnet. Der Pflanzbehälter wird nur aus dem Regallagerplatz ausgelagert und auf der Ladeplattform positioniert. Die Ladeplattform kann somit beispielsweise auf der Höhe des Regallagerfaches bleiben, wobei die Aufnahme eines Bildes relativ zeitnah nach der Auslagerung des Pflanzbehälters erfolgt.

### Alternative B)

Bei der zweiten Alternative finden folgende Verfahrensschritte statt:
- Positionierung der Ladeplattform auf Höhe des Transportroboters

Bei diesem Verfahrensschritt wird die Ladeplattform zu dem Transportroboter bewegt. Vorzugsweise wird die Ladeplattform auf die oberste Position angehoben.
- Aufnahme (und Speicherung) mindestens eines Bildes von den Pflanzen mit der Kamera mit aktivierter Lichtquelle im Bereich des Transportroboters.

Die Kamera und die Lichtquelle sind an dem Transportroboter angeordnet. Die Pflanzen werden somit zu der Kamera und der Lichtquelle bewegt. Dadurch besteht der Vorteil, dass die Ladeplattform mit den aufgeladenen Pflanzen je nach Pflanzengröße optimal gegenüber der Kamera und der Lichtquelle positionierbar sind. Mit Hilfe der beweglichen Ladeplattform lässt sich somit der optimale vertikale Abstand zwischen der Pflanze und der Kamera einstellen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schienengebundener Transportroboter gemäß dem Stand der Technik
- Figur 2:: Regallager mit einem schienengebundenen Transportroboter gemäß dem Stand der Technik
- Figur 3:: schematische Darstellung des erfindungsgemäßen Transportroboter mit einer Kamera und Lichtquelle im Bereich der Ladeplattform
- Figur 4:: schematische Darstellung des erfindungsgemäßen Transportroboter mit einer Kamera und Lichtquelle im Bereich des Transportroboters

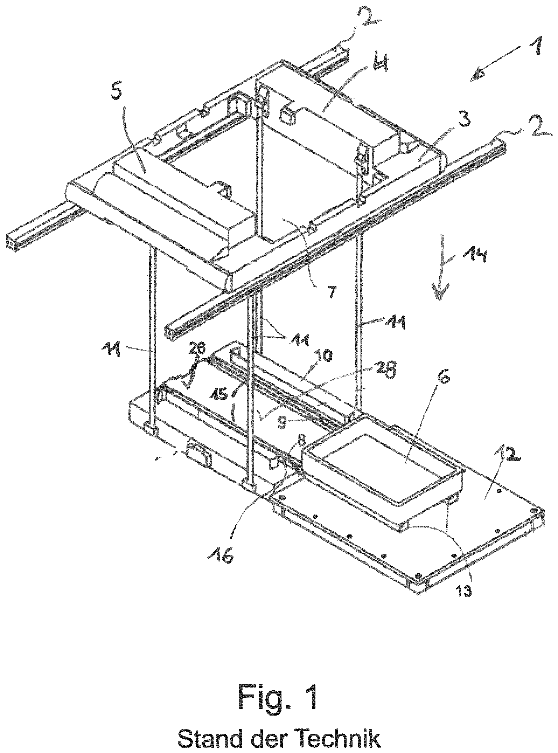

Mit der Figur 1 wird ein Transportroboter 1 gemäß dem Stand der Technik gezeigt. Bei dem Transportroboter 1 handelt es sich um einen Transportroboter, wie er mit der DE 10 2017 121 638 A1 offenbart wird, auf welche vollumfänglich Bezug genommen.

Der Transportroboter 1 ist in Längsrichtung verfahrbar angetrieben und befindet sich auf einer Schienenbahn 2, die aus zwei zueinander beabstandeten und parallel verlaufenden Profilschienen besteht. Die Antriebsräder sind nicht dargestellt. Der Transportroboter 1 weist ein Gehäuse 3 auf, welches in seinem Mittenbereich eine Ausnehmung 7 aufweist, in der mit Bewegungsspiel eine heb- und senkbar ausgebildete Ladeplattform 10 angeordnet ist.

Es sind zwei einander gegenüberliegende Hubantriebskästen 4, 5 vorgesehen. In jedem Hubantriebskasten 4, 5 ist ein Hubmotor angeordnet, der über einen Antriebsriemen eine Antriebswelle antreibt, die drehfest mit zwei gegenüberliegend angeordneten Wickeltrommeln verbunden ist. Jeweils ein Hubband 11 ist über jede Wickeltrommel gewickelt.

Bei einem synchronen Antrieb der Hubmotoren wird die Ladeplattform 10 gemäß Fig. 1 in vertikaler Richtung in Pfeilrichtung 14 abgesenkt und kann in Gegenüberstellung zu einem Regellagerplatz 12 gebracht werden, der eine horizontale (oder schräg geneigte) Ablageebene ausbildet.

Auf der Ablageebene des Regallagerplatzes 12 sind zwei zueinander parallele Ablagepaneele 13 angeordnet, in deren Hohlprofil die beiden Förderbänder 8, 9 des Längsförderers 15 hineinfahren. Dies erfolgt dadurch, dass gemäß Fig. 1 der Längsförderer 15 zwei zueinander parallele Teleskopschlitten 16 aufweist, welche die wirksame Auszugslänge der Förderbänder 8, 9 um das zwei- oder dreifache vergrößern können.

Der Längsförderer 15 ist bevorzugt ein Teleskopschlitten 16, der mit teleskopartig ausfahrbaren förderbandartigen Ladegabeln in der Lage ist, in seitlicher horizontaler Richtung über den Außenumriss der Ladeplattform 10 hinaus fahren zu können, um ein neben der Ladeplattform 10 auf einem Regallagerplatz 12 gelagerten Pflanzbehälter 6 zu unterfahren und aufzunehmen. Dabei sind die teleskopartig ausfahrbaren Ladegabeln als angetriebene Förderbänder 8, 9 ausgebildet, die auf einem Teleskopschlitten 16 angeordnet sind, welche bei ausgefahrenen Teleskopschlitten 16 in der Lage sind, das Ladegut (Pflanzbehälter 6) bodenseitig zu unterfahren und sich an die Bodenseite des Pflanzbehälters 6 anzulegen.

Gemäß der Figur 1 findet eine seitliche Abladung oder Aufladung eines Pflanzbehälters 6 in einem Regallagerplatz 12 statt. Es ist erkennbar, dass die Ladeplattform 10 auf die Ablageebene des Regallagerplatzes 12 abgesenkt ist und die Förderbänder 8, 9, die in einem verschiebbar angetriebenen Längsförderer angeordnet sind, in die auf dem Regallagerplatz 12 angeordneten Ablagepaneele 13 hinein fahrbar sind, wobei die beiden Förderbänder 8, 9 den Pflanzbehälter 6 bodenseitig untergreifen.

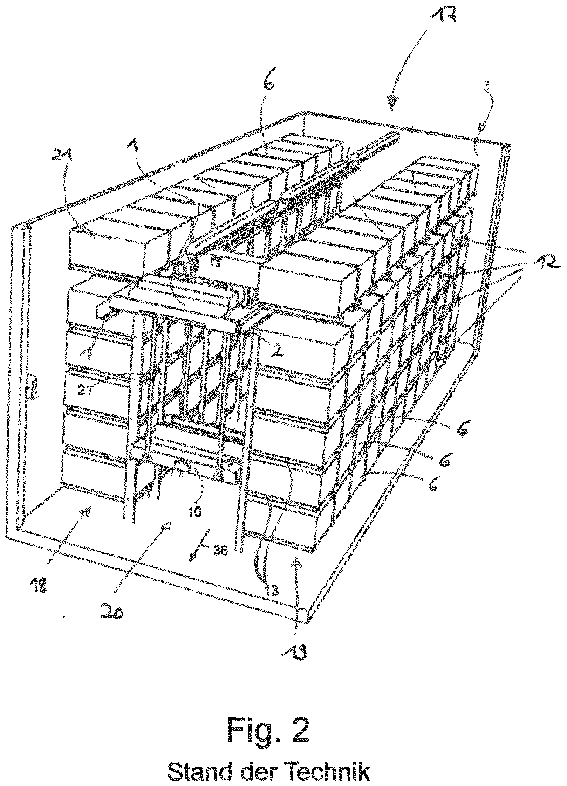

Mit der Figur 2 wird ein Regallager 17 gemäß dem Stand der Technik gezeigt. Das Regallager 17 besteht aus einer ersten Regalreihe 18 und einer zweite Regalreihe 19. Die beiden Regalreihen 18, 19 sind beabstandet voneinander angeordnet, wobei sich dazwischen eine Regalgasse 20 erstreckt. In der Regalgasse 20 ist deckseitig ein Transportroboter 1 angeordnet, welcher auf einer Schienenbahn 2 fährt, wobei eine erste Schiene der ersten Regalreihe 18 und eine zweite Schiene der zweiten Regalreihe 19 zugeordnet ist. Die Regalreihen 18 und 19 weisen sechs Regalplätze 12 in vertikaler Richtung und elf Regallagerplätze 12 in horizontaler Richtung auf. Alle Regallagerplätze 12 sind gleich groß ausgebildet.

Die Regallagerplätze 12 werden durch Ablagepaneele 13 gebildet, auf welchen die Pflanzbehälter 6 aufliegen, so dass jeder Pflanzbehälter 6 von dem darüber und daneben angeordneten Pflanzbehälter 6 beabstandet ist. Auf diese Weise ergibt sich die Möglichkeit, dass der Transportroboters 1 in der Regalgasse 20 jeden beliebigen Pflanzbehälter 6 in jeder beliebigen Regalreihe 18, 19 und Regalspalte 21 seitlich untergreifen und auf seine Ladeplattform 10 aufladen kann.

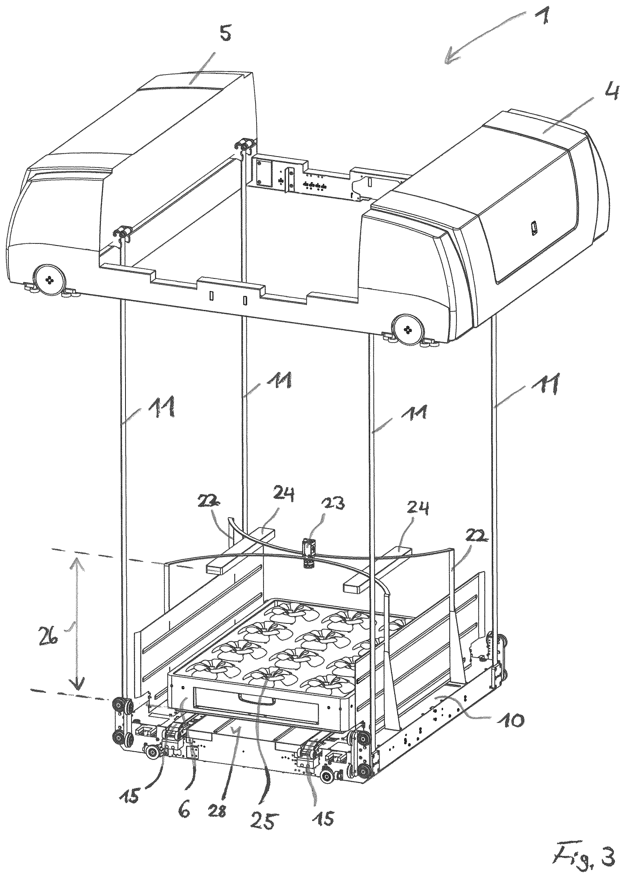

Mit der Figur 3 wird der Transportroboter 1 mit der heb- und senkbar angetriebenen Ladeplattform 10 gezeigt. Auf der Ladeplattform 10 befindet sich ein Trägergerüst 22, welches sich über die gesamte Breite der Ladeplattform 10 erstreckt. Das Trägergerüst 22 ist mit einem Abstand 26 von der Ladeebene 28 der Ladeplattform 10 angeordnet. Durch den vertikalen Abstand 26 kann eine Kamera 23 eingesetzt werden, welche keine zusätzlichen Vorrichtungen (z.B. Fokus, Blendenöffnung, ISO- Einstellungen, usw.) notwendig sind.

An dem Trägergerüst 22 ist auch die mindestens eine Lichtquelle 24 angeordnet. Gemäß der Figur 3 besteht die Lichtquelle 24 aus zwei beabstandeten Lichtbalken 24 zwischen welchen die Kamera 23 angeordnet ist.

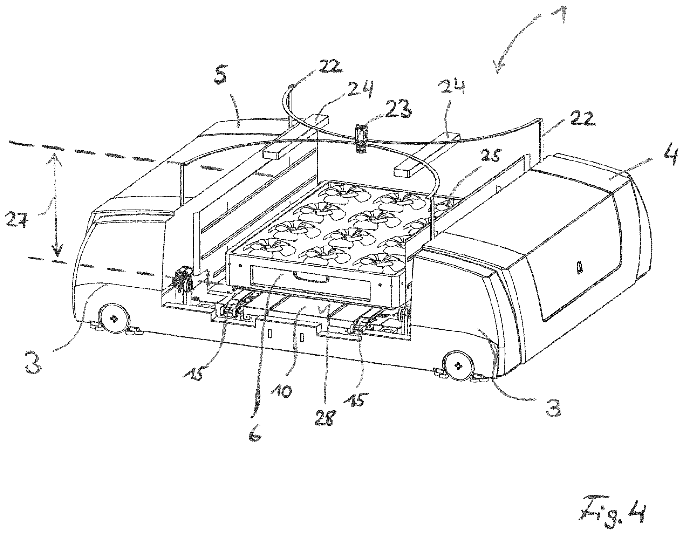

Die Figur 4 zeigt eine weitere Ausführungsform des Transportroboters 1 mit der Kamera 23 und der Lichtquelle 24. Der Transportroboter 1 weist eine Ausnehmung 7 zwischen den beiden Hubantriebskästen 4, 5 auf. Die Ladeplattform 10 ist innerhalb der Ausnehmung 7 vertikal heb- und senkbar, wobei die Figur 4 die oberste Position der Ladeplattform 10 zeigt. Dadurch besteht ein fixer Abstand 27 zwischen der Ladeebene 27 und dem Trägergerüst

Das Trägergerüst 22 ist am Transportroboter 1 angeordnet. Gemäß der Figur 4 können die vier beabstandeten Arme des Trägergerüst 22 mit den Hubantriebskästen 4 und 5 verbunden sein. Durch die fixe Anordnung der Kamera 23 und der beiden Lichtquellen 24 mit dem Trägergerüst 22 an dem Transportroboter 1 muss der Pflanzbehälter 6 mit den Pflanzen 25 mit der Ladeplattform 10 zum Transportroboter 1 gebracht werden. Die fixe Anordnung der Kamera 23 mit den Lichtquellen 24 hat den Vorteil, dass stets der gleiche Abstand zwischen den Pflanzen 25 und der Kamera 23 besteht. Es kann daher eine eher kostengünstige Kamera 23 eingesetzt werden, da diese keine zusätzlichen Vorrichtung, wie z.B. Fokus, Blendenöffnung, ISO- Einstellungen benötigt.

### Zeichnungslegende

- 1.: Transportroboter
- 2.: Schienenbahn
- 3.: Gehäuse
- 4.: Hubantriebskasten
- 5.: Hubantriebskasten
- 6.: Pflanzbehälter
- 7.: Ausnehmung (von 3)
- 8.: Förderband
- 9.: Förderband
- 10.: Ladeplattform
- 11.: Hubband
- 12.: Regallagerplatz
- 13.: Ablagepanelle
- 14.: Pfeilrichtung
- 15.: Längsförderer
- 16.: Teleskopschlitten
- 17.: Regallager
- 18.: Regalreihe (links)
- 19.: Regalreihe (rechts)
- 20.: Regalgasse (mitte)
- 21.: Regalspalte
- 22.: Trägergerüst
- 23.: Kamera
- 24.: Lichtquelle
- 25.: Pflanzen
- 26.: Abstand
- 27.: Abstand
- 28.: Ladeebene

## Patentansprüche

1. Transportroboter (1) zur Aufzucht von Pflanzen (25) in einem Regallager (17), wobei der Transportroboter (1) als schienengebundener Transportroboter (1) ausgebildet ist und deckenseitig in dem Regallager (17) fahrbar angeordnet ist, wobei der Transportroboter (1) mit einer heb- und senkbar angetriebenen Ladeplattform (10) mit einer Ladeebene (28) und mindestens einem darauf angeordneten Längsförderer (15) mindestens einen Pflanzbehälter (6) in Regallagerplätze (12) des Regallagers (17) ein- oder auslagert, wobei mindestens eine Kamera (23) mindestens eine Aufnahme von den Pflanzen (25) macht, **dadurch gekennzeichnet, dass** der Transportroboter (1) mindestens eine Kamera (23) und mindestens eine separate Lichtquelle (24) aufweist, welche an der vertikal beweglichen Ladeplattform (10) angeordnet sind.

2. Transportroboter nach Anspruch 1, **dadurch gekennzeichnet, dass** die Ladeplattform (10) ein Trägergerüst (22) aufweist, welches sich über die Ladeplattform (10) erstreckt und dass das Trägergerüst (22) mit einem vertikalen Abstand (26) von der Ladeebene (28) der Ladeplattform (10) angeordnet ist und dass an dem Trägergerüst (22) die Kamera (23) und die mindestens eine separate Lichtquelle (24) angeordnet sind.

3. Transportroboter (1) zur Aufzucht von Pflanzen (25) in einem Regallager (17), wobei der Transportroboter (1) als schienengebundener Transportroboter (1) ausgebildet ist und deckenseitig in dem Regallager (17) fahrbar angeordnet ist, wobei der Transportroboter (1) mit einer heb- und senkbar angetriebenen Ladeplattform (10) mit einer Ladeebene (28) und mindestens einem darauf angeordneten Längsförderer (15) mindestens einen Pflanzbehälter (6) in Regallagerplätze (12) des Regallagers (17) ein- oder auslagert, wobei mindestens eine Kamera (23) mindestens eine Aufnahme von den Pflanzen (25) macht, **dadurch gekennzeichnet, dass** der Transportroboter (1) mindestens eine Kamera (23) und mindestens eine separate Lichtquelle (24) aufweist, welche im Bereich des Gehäuses (3) des Transportroboters (1) angeordnet sind.

4. Transportroboter (1) nach Anspruch 3, **dadurch gekennzeichnet, dass** der Transportroboter (1) ein Trägergerüst (22) aufweist, welches sich zumindest über die Ladeplattform (10) erstreckt und dass das Trägergerüst (22) mit einem vertikalen Abstand (27) von der Ladeebene (28) der Ladeplattform (10) angeordnet ist und dass an dem Trägergerüst (22) die Kamera (23) und die mindestens eine separate Lichtquelle (24) angeordnet sind.

5. Vorrichtung zur Aufzucht von Pflanzen (25) in Pflanzbehältern (6), bestehend aus einem Regallager (17) und mindestens einem schienengebundenen Transportroboter (1), wobei das Regallager (17) mindestens eine erste Regalreihe (18) mit Regallagerplätzen (12) für Pflanzbehälter (6) und mindestens eine beabstandete, zweite Regalreihe (19) mit Regallagerplätzen (12) für Pflanzbehälter (6) aufweist, wobei zwischen den beiden Regalreihen (18, 19) eine Regalgasse (20) besteht, in der deckenseitig der schienengebundene Transportroboter (1) fahrbar angeordnet ist, welcher mit einer heb- und senkbar angetriebenen Ladeplattform (10) und mindestens einem darauf angeordneten Längsförderer (15) mindestens einen Pflanzbehälter (6) in die Regallagerplätze (12) ein- oder auslagert, wobei mindestens eine Kamera (23) mindestens eine Aufnahme von den Pflanzen (25) macht, **dadurch gekennzeichnet, dass** der Transportroboter (1) mindestens eine Kamera (23) und mindestens eine Lichtquelle (24) aufweist, welche an der vertikal beweglichen Ladeplattform (10) oder an dem Gehäuse (3) des Transportroboters (1) angeordnet sind.

6. Transportroboter (1) nach einem der Ansprüche 1 bis 5, **dadurch gekennzeichnet, dass** die Lichtquelle (24) aus zwei beabstandeten Lichtbalken (24) besteht, zwischen welchen die Kamera (23) angeordnet ist.

7. Transportroboter (1) nach einem der Ansprüche 1 bis 6, **dadurch gekennzeichnet, dass** die Lichtquelle (24) hinsichtlich Lichtspektrum, Lichtfarbe, Lichtintensität, Dauer und/oder Abstrahlcharakteristik an den jeweiligen Anwendungsfall anpassbar ist.

8. Transportroboter (1) nach einem der Ansprüche 1 bis 7, **dadurch gekennzeichnet, dass** die Kamera (23) als Monochrom-Kamera, RGB-Kamera (Farbkamera), Global-Shutter-Kamera oder Rolling-Shutter-Kamera ausgebildet ist.

9. Transportroboter (1) nach einem der Ansprüche 1 bis 7, **dadurch gekennzeichnet, dass** die Kamera ein Fixfokus-Objektiv aufweist.

10. Transportroboter (1) nach einem der Ansprüche 1 bis 9, **dadurch gekennzeichnet, dass** eine Auswertung der Aufnahmen der Kamera (23) mit einer intelligenten Software (Artificial Intelligence Software) erfolgt.

11. Transportroboter (1) nach einem der Ansprüche 1 bis 10, **dadurch gekennzeichnet, dass** eine Auswertung der Aufnahmen der Kamera (23) hinsichtlich der Größe der Pflanzen (25), der Farbe der Pflanzen (23), einem Schädlingsbefall oder einer Krankheit an der Pflanze erfolgt.

12. Verfahren zur Aufzucht von Pflanzen (25) in Pflanzbehältern (6), bestehend aus einem Regallager (17) und mindestens einem schienengebundenen Transportroboter (1), wobei das Regallager (17) mindestens eine erste Regalreihe (18) mit Regallagerplätzen (12) für Pflanzbehälter (6) und mindestens eine beabstandete, zweite Regalreihe (19) mit Regallagerplätzen (12) für Pflanzbehälter (6) aufweist, wobei zwischen den beiden Regalreihen (18, 19) eine Regalgasse (20) besteht, in der deckenseitig der schienengebundene Transportroboter (1) fahrbar angeordnet ist, welcher mit einer heb- und senkbar angetriebenen Ladeplattform (10) und mindestens einem darauf angeordneten Längsförderer (15) mindestens einen Pflanzbehälter (6) in mindestens einen Regallagerplatz (12) ein- oder auslagert, wobei mindestens eine Kamera (23) mindestens eine Aufnahme von den Pflanzen (25) macht, **dadurch gekennzeichnet, dass** der Transportroboter (1) mindestens eine Kamera (23) und mindestens eine separate Lichtquelle (24) aufweist, welche an der vertikal beweglichen Ladeplattform (10) oder an dem Gehäuse (3) des Transportroboters (1) angeordnet sind und folgende Verfahrensschritte ausführt:
• Anfahren und Positionieren der Ladeplattform (10) gegenüber einem ausgewählten Regallagerplatz (12);
• Auslagerung des Pflanzbehälters (6) mit den Längsförderern (15) auf die Ladeplattform (10);
• Aufnahme mindestens eines Bildes von den Pflanzen (25) in dem Pflanzbehälter (6) mit der Kamera (23) mit aktivierter Lichtquelle (24);

13. Verfahren zur Aufzucht von Pflanzen (25) in Pflanzbehältern (6) nach Anspruch 13, **dadurch gekennzeichnet, dass**
• Aufnahme mindestens eines Bildes von den Pflanzen (25) in dem Pflanzbehälter (6) mit der Kamera (23) mit aktivierter Lichtquelle (24) auf der Ladeplattform (10).

14. Verfahren zur Aufzucht von Pflanzen (25) in Pflanzbehältern (6) nach Anspruch 12, **dadurch gekennzeichnet, dass**
• Positionierung der Ladeplattform (10) auf Höhe des Transportroboters (1);
• Aufnahme mindestens eines Bildes von den Pflanzen (25) in dem Pflanzbehälter (6) mit der Kamera (23) mit aktivierter Lichtquelle (24) im Bereich des Transportroboters (1).

15. Verfahren zur Aufzucht von Pflanzen (25) in Pflanzbehältern (6) nach einem der Ansprüche 12 bis 14, **dadurch gekennzeichnet, dass** eine Auswertung der Aufnahmen der Kamera (23) hinsichtlich der Größe der Pflanzen (25), der Farbe der Pflanzen (25), einem Schädlingsbefall oder einer Krankheit an der Pflanze erfolgt.
